# EUROPÄISCHE PATENTSCHRIFT

(11) **EP 4 214 096 B1**
(45) Veröffentlichungstag und Bekanntmachung des Hinweises auf die Patenterteilung: **29.10.2025**
(21) Anmeldenummer: 21763239.7
(22) Anmeldetag: 30.07.2021
(51) Int. Cl.: B60R 21/01, B60R 21/017

(54) **VERFAHREN UND STEUERGERÄT ZUM SCHUTZ VOR UNAUTORISIERTEM VERBAU EINER PYROTECHNISCHEN KOMPONENTE**
METHOD AND CONTROLLER FOR PROTECTION FROM UNAUTHORISED INSTALLATION OF A PYROTECHNIC COMPONENT
PROCÉDÉ ET CONTRÔLEUR DE PROTECTION CONTRE L'INSTALLATION NON AUTORISÉE D'UN COMPOSANT PYROTECHNIQUE

(30) Priorität: 15.09.2020 DE 102020124056
(43) Veröffentlichungstag der Anmeldung: 26.07.2023
(73) Patentinhaber: Bayerische Motoren Werke Aktiengesellschaft, 80809 München (DE)
(72) Erfinder: NEHLS, Wolfgang, 85716 Unterschleissheim (DE)
(86) Internationale Anmeldenummer: PCT/EP2021/071455
(87) Internationale Veröffentlichungsnummer: WO 2022/058080

(56) Entgegenhaltungen:
- EP-A1- 2 106 942
- DE-A1- 10 260 475
- DE-A1- 102007 023 322
- DE-A1- 102013 000 116

## Beschreibung

Die Erfindung betrifft ein Fahrzeug mit ein oder mehreren pyrotechnischen Komponenten, wie z.B. einem Fahrer-Airbag-Modul oder einem Gurtstraffer. Insbesondere betrifft die Erfindung ein Verfahren und ein entsprechendes Steuergerät, mit denen der unautorisierte Verbau einer pyrotechnischen Komponente in effizienter und zuverlässiger Weise unterbunden werden kann.

Ein Fahrzeug kann ein oder mehrere pyrotechnische Komponenten, wie z.B. ein Airbag-Modul oder einen Gurtstraffer, umfassen. Ein Airbag-Modul kann z.B. Teil des Lenkrads des Fahrzeugs sein, in dem ein Airbag integriert ist. Bei einer Auslösung des Airbags wird Treibmittel im Airbag-Modul elektrisch gezündet und der gasgefüllte Sack entfaltet seine Schutzwirkung.

Nach einer Auslösung ist das Airbag-Modul komplett auszutauschen, eine selektive Reparatur des Moduls ist typischerweise nicht möglich. Da die Kosten eines Airbag-Moduls relativ hoch sein können, hat sich eine Beschaffungskriminalität entwickelt, bei der Airbag-Module aus anderen Fahrzeugen ausgebaut und/oder gestohlen werden. Diese Airbag-Module werden dann in unzulässiger Weise in Fahrzeugen mit bereits ausgelösten Airbag-Modulen, die ausgetauscht werden müssen, eingebaut.

DE 10 2013 000116 A1 beschreibt ein Verfahren zur Identifikation von pyrotechnischen Einheiten in einem Kraftfahrzeug.

Der Diebstahl von Airbag-Modulen führt zu Schädigungen von Fahrzeugnutzern und Versicherungen. Das vorliegende Dokument befasst sich mit der technischen Aufgabe, in effizienter und zuverlässiger Weise den unzulässigen Verbau einer pyrotechnischen Komponente, insbesondere eines Airbag-Moduls, in einem Fahrzeug zu unterbinden, insbesondere um die damit verbundene Beschaffungskriminalität zu beseitigen.

Die Aufgabe wird durch jeden der unabhängigen Ansprüche gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird ein Steuergerät zur Auslösung einer pyrotechnischen Komponente (insbesondere eines Airbag-Moduls oder eines Gurtstraffers) eines (Kraft-) Fahrzeugs beschrieben. Das Steuergerät kann ausgebildet sein, in einem Bordnetz des Fahrzeugs verbaut zu werden.

Das Steuergerät ist eingerichtet, einen Auslöse-Status der pyrotechnischen Komponente zu ermitteln und zu speichern. Der Auslöse-Status kann z.B. in einer Speichereinheit, etwa als Flag, des Steuergeräts gespeichert sein. Der Auslöse-Status kann z.B. einen ausgelösten Zustand oder einen nichtausgelösten Zustand aufweisen. Das Steuergerät kann ausgebildet sein, eine an das Steuergerät angeschlossene pyrotechnische Komponente bei Bedarf (z.B. im Falle eines Unfalls) auszulösen, wenn der Auslöse-Status den nichtausgelösten Zustand aufweist. Andererseits kann das Steuergerät (optional) ausgebildet sein, ein Auslösen der an das Steuergerät angeschlossenen pyrotechnischen Komponente zu unterbinden, wenn der Auslöse-Status den ausgelösten Zustand aufweist. Es kann somit optional ein Sperren der Auslösung bewirkt werden, wenn der Auslöse-Status den ausgelösten Zustand aufweist. Ferner kann (bevorzugt) ein Anzeigeelement des Fahrzeugs aktiviert werden bzw. aktiv gehalten werden, um einem Nutzer des Fahrzeugs den ausgelösten Zustand des Auslöse-Status anzuzeigen. Es kann somit ein Zurücksetzen des Anzeigeelements des Fahrzeugs (z.B. einer Warnleuchte) verhindert werden, wenn der Auslöse-Status den ausgelösten Zustand aufweist.

Das Steuergerät kann ausgebildet sein, wenn der Auslöse-Status den nichtausgelösten Zustand aufweist, den Betrieb des Steuergeräts mit einer pyrotechnischen Komponente in dem Fahrzeug ohne Freigabe der pyrotechnischen Komponente zu ermöglichen. So wird ein effizienter erstmaliger Verbau einer pyrotechnischen Komponente in dem Fahrzeug und/oder in Zusammenhang mit dem Steuergerät ermöglicht. Beispielsweise kann der Auslöse-Status standardmäßig in dem nichtausgelösten Zustand sein. So kann während der Herstellung des Fahrzeugs der Verbau einer pyrotechnischen Komponente in dem Fahrzeug ohne Durchführung eines Freigabeprozesses ermöglicht werden.

Des Weiteren kann das Steuergerät eingerichtet sein, wenn der Auslöse-Status den ausgelösten Zustand aufweist (und somit bereits eine Auslösung der ursprünglich verbauten pyrotechnischen Komponente erfolgt ist), den Auslöse-Status von dem ausgelösten Zustand in den nichtausgelösten Zustand zurückzusetzen, wenn eine Freigabe der pyrotechnischen Komponente vorliegt. Das Steuergerät kann insbesondere eingerichtet sein, den Auslöse-Status nur dann von dem ausgelösten Zustand in den nichtausgelösten Zustand zurückzusetzen, wenn eine Freigabe der (neu in das Fahrzeug verbauten) pyrotechnischen Komponente vorliegt. Alternativ oder ergänzend kann das Steuergerät eingerichtet sein, den Auslöse-Status in dem ausgelösten Zustand zu belassen, wenn keine Freigabe der (neu) in das Fahrzeug verbauten pyrotechnischen Komponente vorliegt.

Das Steuergerät kann ferner eingerichtet sein, das Anzeigeelement des Fahrzeugs zur Anzeige einer ausgelösten pyrotechnischen Komponente, insbesondere nur dann, zurückzusetzen, wenn der Auslöse-Status von dem ausgelösten Zustand in den nichtausgelösten Zustand zurückgesetzt wurde. Alternativ oder ergänzend kann das Steuergerät eingerichtet sein, die in dem Fahrzeug (ggf. neu) verbaute pyrotechnische Komponente, insbesondere nur dann, bei Bedarf (etwa im Falle eines Unfalls des Fahrzeugs) auszulösen, wenn der Auslöse-Status von dem ausgelösten Zustand in den nichtausgelösten Zustand zurückgesetzt wurde.

Das Steuergerät kann somit eingerichtet sein, den Betrieb einer neu in das Fahrzeug verbauten pyrotechnischen Komponente zu unterbinden, wenn keine erfolgreiche Freigabe der neu verbauten pyrotechnischen Komponente erfolgt ist. So kann zuverlässig vermieden werden, dass eine (ggf. gestohlene) pyrotechnische Komponente in das Fahrzeug verbaut werden kann.

Das Steuergerät ermöglicht es somit, in effizienter und zuverlässiger Weise den unzulässigen Verbau einer pyrotechnischen Komponente, z.B. eines Airbag-Moduls, in einem Fahrzeug zu unterbinden, insbesondere um die damit verbundene Beschaffungskriminalität zu beseitigen.

Die pyrotechnische Komponente kann ein Identifikationsmittel umfassen, das ausgebildet ist, die pyrotechnische Komponente eindeutig aus einer Mehrzahl von unterschiedlichen pyrotechnischen Komponenten (und der entsprechenden Mehrzahl von Identifikationsmitteln) zu identifizieren. Die Mehrzahl von Identifikationsmitteln der Mehrzahl von unterschiedlichen pyrotechnischen Komponenten, die als Ersatzteile zugelassen bzw. freigegeben sind, können auf einem Backend-Server gespeichert sein.

Das Identifikationsmittel kann in effizienter Weise einen maschinen-lesbaren Code, insbesondere einen Barcode oder einen QR-Code, mit einer Seriennummer der pyrotechnischen Komponenten umfassen. Alternativ oder ergänzend kann das Identifikationsmittel eine für einen Menschen lesbare Seriennummer der pyrotechnischen Komponenten umfassen.

Die Freigabe der (neu) in das Fahrzeug verbauten pyrotechnischen Komponente kann dann in zuverlässiger und effizienter Weise auf Basis des Identifikationsmittels der pyrotechnischen Komponente erfolgen (z.B. durch Vergleich des Identifikationsmittels mit der Mehrzahl von Identifikationsmitteln der Mehrzahl von unterschiedlichen pyrotechnischen Komponenten, die als Ersatzteile zugelassen bzw. freigegeben sind). Insbesondere kann das Steuergerät eingerichtet sein, die (neu) in das Fahrzeug verbaute pyrotechnische Komponente auf Basis des Identifikationsmittels der pyrotechnischen Komponente freizugeben oder nicht freizugeben. So kann eine effiziente und zuverlässige Freigabe einer (neu) in das Fahrzeug verbauten pyrotechnischen Komponente durchgeführt werden.

Das Steuergerät kann eingerichtet sein, wenn der Auslöse-Status den ausgelösten Zustand aufweist, zu detektieren, dass eine neue pyrotechnische Komponente in das Fahrzeug verbaut wurde. Dies kann z.B. auf Basis eines elektrischen Widerstands der pyrotechnischen Komponente erkannt werden. Beispielsweise können eine bereits ausgelöste pyrotechnische Komponente und eine noch nicht ausgelöste (neue) pyrotechnische Komponente unterschiedliche Widerstandswerte aufweisen. Das Steuergerät kann eingerichtet sein, den Widerstandswert der an das Steuergerät angeschlossenen pyrotechnischen Komponente zu erfassen.

Des Weiteren kann das Steuergerät eingerichtet sein, zu erkennen, dass die neue pyrotechnische Komponente ein oder mehrere technische Bedingungen, insbesondere in Bezug auf den elektrischen Widerstand, erfüllt, durch die es (im Prinzip und/oder rein technisch) ermöglicht wird, den Auslöse-Status von dem ausgelösten Zustand in den nichtausgelösten Zustand zurückzusetzen. Insbesondere kann erkannt werden, dass die pyrotechnische Komponente ein oder mehrere technische Bedingungen aufweist, die es ermöglichen, die pyrotechnische Komponente zu betreiben, d.h. bei Bedarf auszulösen.

Doch auch wenn die neu verbaute pyrotechnische Komponente die ein oder mehreren technischen Bedingungen für den Betrieb in dem Fahrzeug erfüllt, kann zunächst von dem Steuergerät überprüft werden, ob eine Freigabe der neuen pyrotechnischen Komponente vorliegt oder nicht. Der Auslöse-Status kann dann, insbesondere nur dann, von dem ausgelösten Zustand in den nichtausgelösten Zustand zurückgesetzt werden, wenn eine Freigabe der neuen pyrotechnischen Komponente vorliegt. So kann in besonders zuverlässiger Weise ein unzulässiger Verbau einer neuen pyrotechnischen Komponente in einem Fahrzeug unterbunden werden.

Das Steuergerät kann eingerichtet sein, zu überprüfen, ob ein gültiger Freigabecode für die Freigabe der pyrotechnischen Komponente über eine Benutzerschnittstelle und/oder über eine Wartungs-Schnittstelle des Fahrzeugs eingegeben wurde. Der Freigabecode kann z.B. von einer Service-Person in einer Werkstatt auf Basis des Identifikationsmittels der (neu verbauten) pyrotechnischen Komponente ermittelt und eingegeben worden sein. Der Auslöse-Status kann dann, insbesondere nur dann, von dem ausgelösten Zustand in den nichtausgelösten Zustand zurückgesetzt werden, wenn ein gültiger Freigabecode eingegeben wurde. So kann in besonders effizienter Weise ein unzulässiger Verbau einer neuen pyrotechnischen Komponente in einem Fahrzeug unterbunden werden.

Das Steuergerät kann eingerichtet sein, eine Mehrzahl von unterschiedlichen Auslöse-Status für eine Mehrzahl von unterschiedlichen pyrotechnischen Komponenten des Fahrzeugs zu ermitteln, zu speichern und bei Vorliegen einer Freigabe für eine jeweils neu verbaute pyrotechnische Komponente zurückzusetzen. Mit anderen Worten, das Steuergerät kann ausgebildet sein, eine Mehrzahl von unterschiedlichen pyrotechnischen Komponenten (für unterschiedliche Funktionen, etwa für unterschiedliche Airbag-Module oder Gurtstraffer) zu betreiben und in Bezug auf einen unzulässigen Austausch zu überwachen. Die unterschiedlichen pyrotechnischen Komponenten können dabei an unterschiedlichen Schnittstellen des Steuergeräts angeschlossen sein.

Wie bereits eingangs dargelegt, kann sich der Auslöse-Status standardmäßig bei Herstellung des Fahrzeugs in dem nichtausgelösten Zustand befinden, so dass bei der Herstellung des Fahrzeugs eine pyrotechnische Komponente ohne Freigabe der pyrotechnischen Komponente in das Fahrzeug eingebaut und anschließend (während des Betriebs des Fahrzeugs) bei Bedarf von dem Steuergerät ausgelöst werden kann. So kann weiterhin eine effiziente Herstellung eines Fahrzeugs ermöglicht werden (ohne dedizierten Freigabeprozess).

Gemäß einem weiteren Aspekt wird ein (Straßen-)Kraftfahrzeug (insbesondere ein Personenkraftwagen oder ein Lastkraftwagen oder ein Bus oder ein Motorrad) beschrieben, das das in diesem Dokument beschriebene Steuergerät umfasst.

Gemäß einem weiteren Aspekt wird ein Verfahren zum Schutz vor einem unautorisierten Verbau einer pyrotechnischen Komponente in einem Fahrzeug beschrieben. Das Verfahren umfasst das Ermitteln und Speichern eines Auslöse-Status der pyrotechnischen Komponente, wobei der Auslöse-Status einen ausgelösten Zustand oder einen nichtausgelösten Zustand aufweist. Des Weiteren umfasst das Verfahren, wenn der Auslöse-Status den nichtausgelösten Zustand aufweist, das Ermöglichen eines Betriebs des Steuergeräts mit einer pyrotechnischen Komponente in dem Fahrzeug ohne Freigabe der pyrotechnischen Komponente. Das Verfahren umfasst ferner, wenn der Auslöse-Status den ausgelösten Zustand aufweist, das Zurücksetzen des Auslöse-Status von dem ausgelösten Zustand in den nichtausgelösten Zustand, wenn eine Freigabe der pyrotechnischen Komponente vorliegt.

Das Verfahren kann zur Freigabe einer in das Fahrzeug neu verbauten pyrotechnischen Komponente umfassen, das Überprüfen, insbesondere auf dem Backend-Server eines Herstellers des Fahrzeugs, des Identifikationsmittels der neu verbauten pyrotechnischen Komponente daraufhin, ob die neu verbaute pyrotechnische Komponente als Ersatzteil freigegeben ist. Des Weiteren kann das Verfahren umfassen, das Rückmelden einer Freigabe oder einer Nicht-Freigabe an das Steuergerät des Fahrzeugs zur Auslösung der neu verbauten pyrotechnischen Komponente. Dabei können die Generierung und die Überprüfung des Identifikationsmittels in einer Block-Chain durchgeführt werden. So kann in besonders effizienter und zuverlässiger Weise ein unzulässiger Verbau einer pyrotechnischen Komponente in einem Fahrzeug unterbunden werden.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1a ein beispielhaftes Fahrzeug mit einer pyrotechnischen Komponente;
Figur 1b eine beispielhafte pyrotechnische Komponente; und
Figur 2 ein Ablaufdiagramm eines beispielhaften Verfahrens zum Schutz vor dem unautorisierten Verbau einer pyrotechnischen Komponente.

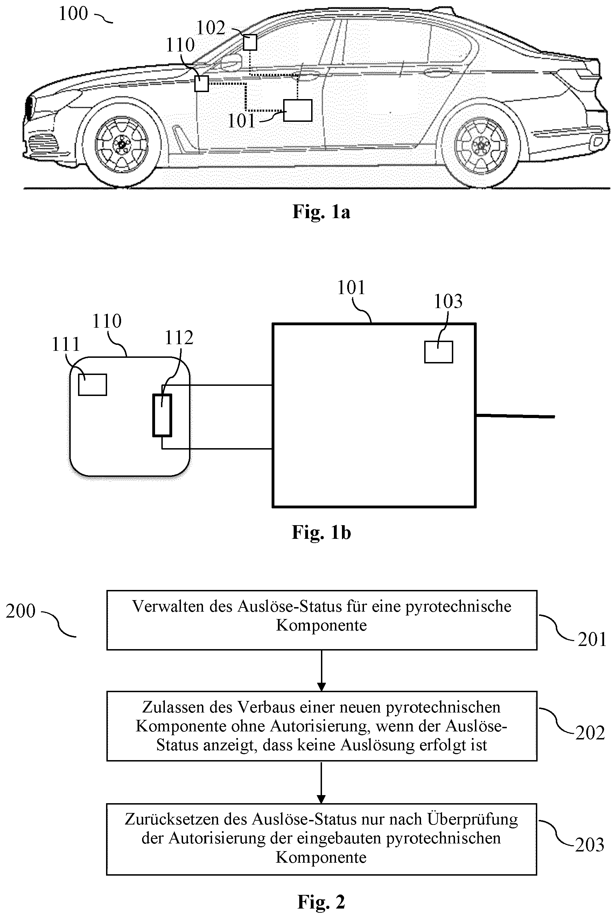

Wie eingangs dargelegt, befasst sich das vorliegende Dokument mit der Bereitstellung eines effizienten und zuverlässigen Schutzes vor dem unautorisierten Verbau einer pyrotechnischen Komponente, wie z.B. einem Airbag-Modul. In diesem Zusammenhang zeigt Fig. 1a ein Fahrzeug 100 mit einer pyrotechnischen Komponente 110. Die pyrotechnische Komponente 110 kann durch ein Steuergerät 101 des Fahrzeugs 100 ausgelöst werden, z.B. wenn eine Kollision des Fahrzeugs 100 detektiert wird.

Fig. 1b zeigt weitere Details der pyrotechnischen Komponente 110 und des Steuergeräts 101. Das Steuergerät 101 kann eingerichtet sein, zum Auslösen der pyrotechnischen Komponente 110 eine Zündeinheit 112 der pyrotechnischen Komponente 110 zu zünden, z.B. durch Anlegen einer Zündspannung an die Zündeinheit 112. Die pyrotechnische Komponente 110 wird daraufhin ausgelöst, um eine bestimmte Funktion (z.B. das Aufblasen eines Airbags) bereitzustellen. Im Anschluss an das Auslösen kann die pyrotechnische Komponente 110 typischerweise nicht mehr verwendet werden, und muss ausgetauscht werden.

Das Steuergerät 101 kann eingerichtet sein, den Auslöse-Status 103 der pyrotechnischen Komponente 110 zu speichern (z.B. in einem Status-Bit). Der Auslöse-Status 103 kann anzeigen, ob die in dem Fahrzeug 100 verbaute pyrotechnische Komponente 110 bereits ausgelöst wurde oder nicht. Wenn der Auslöse-Status 103 eine bereits ausgelöste pyrotechnische Komponente 110 anzeigt, so kann ggf. ein erneutes Auslösen der pyrotechnischen Komponente 110 unterbunden werden. Mit anderen Worten, ein Auslösen der pyrotechnischen Komponente 110 durch das Steuergerät 101 kann ggf. nur dann möglich sein, wenn der Auslöse-Status 103 anzeigt, dass die pyrotechnische Komponente 110 noch nicht ausgelöst wurde (z.B. wenn der Auslöse-Status 103 den nichtausgelösten Zustand aufweist).

Ferner kann das Steuergerät 101 eingerichtet sein, zu bewirken, dass durch eine Anzeigeeinheit 102 des Fahrzeugs 100, etwa auf dem Armaturenbrett des Fahrzeugs 100, angezeigt wird, dass die pyrotechnische Komponente 110 bereits ausgelöst wurde (wenn der Auslöse-Status 103 eine bereits ausgelöste pyrotechnische Komponente 110 anzeigt, bzw. wenn der Auslöse-Status 103 den ausgelösten Zustand aufweist).

Das Steuergerät 101 kann derart ausgebildet sein, dass das Zurücksetzen des Auslöse-Status 103 ggf. nur durch autorisiertes Service-Personal durchgeführt werden kann.

Im Rahmen der Fertigung eines Fahrzeugs 100 kann der Auslöse-Status 103 standardmäßig den nichtausgelösten Zustand der pyrotechnischen Komponente 110 anzeigen. Dies ermöglicht es, eine beliebige pyrotechnische Komponente 110 aus einem Vorrat von pyrotechnischen Komponenten 110 in das Fahrzeug 100 einzubauen.

Andererseits kann das Steuergerät 101 ausgebildet sein, zu überprüfen, ob eine neu verbaute pyrotechnische Komponente 110 für den Verbau autorisiert ist, wenn der Auslöse-Status 103 einen ausgelösten Zustand der pyrotechnische Komponente 110 anzeigt. Mit anderen Worten, der Verbau und/oder der anschließende Betrieb einer pyrotechnischen Komponente 110 können ggf. nur nach einer erfolgreichen Autorisierung der neu verbauten pyrotechnischen Komponente 110 ermöglicht werden, wenn der Auslöse-Status 103 einen ausgelösten Zustand aufweist. So kann in effizienter und zuverlässiger Weise vermieden werden, dass eine gestohlene pyrotechnische Komponente 110 in einem anderen Fahrzeug 100 verbaut werden kann.

Die pyrotechnische Komponente 110 kann, z.B. auf einem Gehäuse, ein Identifikationsmittel 111 aufweisen. Das Identifikationsmittel 111 kann ausgebildet sein, die pyrotechnische Komponente 110 eindeutig zu identifizieren. Ein besonders effizientes Identifikationsmittel 111 ist eine auf die pyrotechnische Komponente 110 aufgebrachte, z.B. aufgeprägte, Seriennummer.

Im Rahmen des Verbaus der pyrotechnischen Komponente 110 kann es für einen Service-Mitarbeiter erforderlich sein, die Seriennummer der pyrotechnischen Komponente 110 in einen Service-Rechner und/oder an einer Benutzer- und/oder Wartungsschnittstelle des Fahrzeugs 100 einzugeben. Es kann dann überprüft werden (z.B. durch Abgleich mit einem Backend-Server des Herstellers der pyrotechnischen Komponente 110 und/oder des Fahrzeugs 100), ob die pyrotechnische Komponente 110 als Ersatzteil für den Verbau in einem Fahrzeug 100 autorisiert ist.

Nach erfolgreicher Autorisierung der eingebauten pyrotechnischen Komponente kann bewirkt werden, dass der Auslöse-Status 103 zurückgesetzt wird (auf den nichtausgelösten Zustand). Als Folge daraus kann auch das Anzeigeelement 102 zurückgesetzt werden (so dass nicht mehr angezeigt wird, dass die pyrotechnische Komponente 110 ausgetauscht werden muss). Ferner kann das Steuergerät 101 für ein Auslösen der neu eingebauten pyrotechnischen Komponente 110 befähigt werden (z.B. im Falle eines Unfalls).

Es wird somit ein Verfahren beschrieben, mit dem in effizienter und zuverlässiger Weise ein unautorisierter Verbau einer pyrotechnischen Komponente 110 vermieden werden kann. Das Verfahren basiert auf der Tatsache, dass das Steuergerät 101 für eine pyrotechnische Komponente 110 typischerweise fest in das Bordnetz eines Fahrzeugs 100 integriert ist, und nicht ohne komplexe Authentisierungsmaßnahmen ausgetauscht werden kann. So kann zuverlässig eine unzulässige Manipulation des Auslöse-Status 103 vermieden werden. Bei der Herstellung eines Fahrzeugs 100 wird in dem Steuergerät 101 eine Zuordnung zwischen ein oder mehreren elektrischen Zündkreisausgängen des Steuergeräts 101 und ein oder mehreren pyrotechnischen Komponenten 110 (z.B. Fahrerairbag, Seitenairbag, Gurtstraffer Fahrer, etc.) festgelegt. Bei einem Auslösevorgang im Falle eines Unfalls werden die ein oder mehreren Zündkreisausgänge (und damit die entsprechenden ein oder mehreren pyrotechnischen Komponenten 110) in einer definierten Abfolge angesteuert und zur Auslösung gebracht. Alle Sequenzen können dabei in einem "Event-Data-Recorder" (EDR) dauerhaft im Steuergerät 101 hinterlegt werden.

Eine Ansteuerung eines Zündkreises (für eine bestimmte pyrotechnische Komponente 110) führt unweigerlich zu einer Zerstörung des entsprechenden Aktuators (d.h. der pyrotechnischen Komponente 110). Der Ausfall eines Aktuators 110 nach entsprechender Ansteuerung bzw. Auslösung wird von dem Steuergerät 101 erkannt und in einem internen Fehlerspeicher (z.B. als Auslöse-Status 103) hinterlegt. Dem Nutzer des Fahrzeugs 100 wird der Ausfall der ein oder mehreren Aktuatoren 110 typischerweise permanent zur Anzeige gebracht (z.B. über eine Warnleuchte 102).

Nach dem Austausch eines Aktuators (d.h. einer pyrotechnischen Komponente 110), kann das Steuergerät 101 überprüfen, ob der elektrische Zündkreis wieder repariert wurde, z.B. ob der elektrische Zündkreis wieder einen vorgegebenen elektrischen Widerstand aufweist. Wenn dies der Fall ist, so kann ggf. der interne Fehlerstatus, insbesondere der Auslöse-Status 103, zurückgesetzt werden. Das Zurücksetzen des Auslöse-Status 103 kann dabei jedoch unterbunden werden, wenn zuvor keine Freigabe der eingebauten pyrotechnischen Komponente 110 durch eine überwachende Entität (z.B. durch den Hersteller der Komponente 110 und/oder durch den Fahrzeughersteller) erfolgt ist.

Die Rücknahme des gespeicherten Fehlers, d.h. das Zurücksetzen des Auslöse-Status 103, im Steuergerät 101 kann somit ggf. erst dann möglich sein, wenn der neu verbaute Aktuator 110 eine Freigabe durch eine autorisierte Entität erhalten hat. Wenn die Freigabe des Aktuators nicht gegeben wird, lässt sich der eingetragene Fehlerspeicher nicht zurücksetzen. Als Folge daraus bleibt auch nach Verbau eines neuen Aktuators 110 die Fehlermeldung erhalten.

Der Freigabeprozess kann wie folgt erfolgen: Jeder Aktuator 110 weist eine individuelle Seriennummer 111 auf, die sichtbar auf der jeweiligen Komponente 110 angebracht sein kann. Die Seriennummer 111 kann z.B. als Barcode, QR-Code und/oder in lesbarer Form aufgebracht sein.

Der Hersteller der Aktuatoren 110 kann bei der Herstellung die Seriennummern 111 der einzelnen Aktuatoren 110 an den Hersteller des Fahrzeugs 100 weitergeben. Übertragung und Speicherung der Seriennummern 111 kann dabei unter Verwendung von IT-Schutzmaßnahmen erfolgen. Der Service-Mitarbeiter, der die Reparatur eines ausgelösten Aktuators 110 vornimmt, kann die Seriennummer 111 des Aktuators 110 einlesen bzw. scannen und elektronisch an den Hersteller des Fahrzeugs 100 (z.B. an einen Backend-Server) übermitteln. Dies kann über eine Kommunikationsverbindung zwischen einem Rechner der Werkstatt und einem Server des Herstellers erfolgen. Dabei kann auch Information in Bezug auf den Reparaturvorgang (z.B. der gespeicherte Fehlercode und die Seriennummer 111 des Austauschteils 110) übertragen werden.

Der Server des Herstellers kann die Seriennummer 111 mit den gespeicherten Seriennummern der als Ersatzteil zulässigen Aktuatoren 110 abgleichen. Bei korrekter Zuordnung kann die Freigabe zur Fehlerlöschung erteilt werden. Andererseits kann die Freigabe unterbunden werden.

Der gesamte Ablauf von der Generierung der Seriennummern 111, der Anfrage bei dem Hersteller des Fahrzeugs 100 sowie die Freigabe zur Fehlerrücknahme kann in einer Block-Chain erfolgen. So können in zuverlässiger Weise Manipulationen ausgeschlossen werden. Die Block-Chain kann auch derart genutzt werden, dass die Daten im Herstellungsprozess des Fahrzeugs 100 erfasst werden. Dies kann bereits bei dem Hersteller des Aktuators 110 erfolgen. Damit können zusätzliche Datenerhebungen im Herstellprozess des Fahrzeugs 100 entfallen.

Der beschriebene Prozess kann skaliert werden. Ggf. kann der beschriebene Prozess nur für ein oder mehrere gefährdete Komponenten 110 eines Fahrzeugs 100 verwendet werden. Unkritische Teile können ggf. durch entsprechende Konfiguration im Steuergerät 101 aus der Überwachung (und dem damit verbundenen Freigabeprozess) herausgenommen werden.

Die in diesem Dokument beschriebene pyrotechnische Komponente 110 kann in effizienter Weise ohne zusätzliche Sicherheitsmaßnahmen implementiert werden (ein Identifikationsmittel 111, insbesondere eine Seriennummer, ist typischerweise bereits heute vorhanden). Der Diebstahlschutz wird erst dann aktiv, wenn der Austausch bzw. der Ersatz einer (bereits ausgelösten oder defekten) pyrotechnischen Komponente 110 vorgenommen werden. Dabei wird gespeicherte Information, insbesondere der Auslöse-Status 103, des Steuergeräts 101 genutzt, um einen Diebstahlschutz zu realisieren.

Wie bereits oben dargelegt, wird beim Auslösen einer pyrotechnischen Komponente 110 der Auslösevorgang im Steuergerät 101 als Auslöse-Status 103 gespeichert. Gleichzeit wird im Fahrzeug 100 typischerweise eine entsprechende Anzeige 102 dauerhaft aktiviert. Die Anzeige 102 zeigt dem Nutzer an, dass das Sicherheitssystem des Fahrzeugs 100 gestört bzw. nicht voll funktionsfähig ist.

Das Zurücksetzen der gespeicherten Auslösung und der damit verbundenen Anzeige 102 kann nur durch den Nachweis erfolgen, dass ein autorisiertes Ersatzteil verbaut wurde.

Durch den beschriebenen Prozess können in der Fahrzeugproduktion Zusatzaufwände vermieden werden, da das Steuergerät 101 noch keine Auslösung hinterlegt hat (der Auslöse-Status 103 ist in dem nichtausgelösten Zustand). In diesem Fall wird jede pyrotechnische Komponente 110 von dem Steuergerät 101 (ohne Freigabeprozess) akzeptiert.

Andererseits kann das Steuergerät 101 im Reparaturfall (nach einer gespeicherten Auslösung) erst wieder in einen fehlerfreien Zustand gebracht werden, nachdem (im Rahmen eines Freigabeprozesses) der Ursprung des Ersatzteils 110 bestätigt wurde.

Fig. 2 zeigt ein Ablaufdiagramm eines beispielhaften (ggf. Computerimplementierten) Verfahrens 200 zum Schutz vor einem unautorisierten Verbau einer pyrotechnischen Komponente 110 in einem Fahrzeug 100. Das Verfahren 200 kann (zumindest teilweise) durch ein Steuergerät 101 des Fahrzeugs 100 ausgeführt werden. Das Verfahren 200 umfasst das Ermitteln und Speichern 201, insbesondere das Verwalten, eines Auslöse-Status 103 der pyrotechnischen Komponente 110. Dabei kann der Auslöse-Status 103 einen ausgelösten Zustand (wenn die bisher in dem Fahrzeug 100 verbaute pyrotechnische Komponente 110 ausgelöst wurde, und daher nicht nochmal ausgelöst werden kann) oder einen nichtausgelösten Zustand (wenn weiterhin das Auslösen einer pyrotechnischen Komponente 110 möglich ist) aufweisen. Der Auslöse-Status 103 kann somit als binäre Größe den ausgelösten Zustand (z.B. "1") oder den nichtausgelösten Zustand (z.B. "0") aufweisen.

Das Verfahren 200 umfasst ferner, wenn der Auslöse-Status 103 den nichtausgelösten Zustand aufweist, Ermöglichen 202 eines Betriebs des Steuergeräts 101 mit einer pyrotechnischen Komponente 110 in dem Fahrzeug 100 ohne (vorhergehende) Freigabe der pyrotechnischen Komponente 110. Der Auslöse-Status 103 kann standardmäßig im nichtausgelösten Zustand sein. Dies ermöglicht es, während der Herstellung des Fahrzeugs 100 ohne Durchführung einer Freigabeprozedur eine pyrotechnische Komponente 110 in dem Fahrzeug 100 zu verbauen, und anschließend zu nutzen. So kann ein effizienter Herstellungsprozess eines Fahrzeugs 100 ermöglicht werden.

Des Weiteren umfasst das Verfahren 200, wenn der Auslöse-Status 103 den ausgelösten Zustand aufweist, das Zurücksetzen 203 des Auslöse-Status 103 von dem ausgelösten Zustand in den nichtausgelösten Zustand (ggf. nur dann), wenn eine Freigabe der pyrotechnischen Komponente 110 vorliegt. Wenn sich der Auslöse-Status 103 in dem ausgelösten Zustand befindet kann somit die Durchführung eines Freigabeprozesses einer neu eingebauten pyrotechnischen Komponente 110 erforderlich sein, um einen anschließenden Betrieb der pyrotechnischen Komponente 110 in dem Fahrzeug 100 zu ermöglichen. So können in zuverlässiger Weise ein nicht-autorisierter Verbau einer pyrotechnischen Komponente 110 und die damit verbundene Beschaffungskriminalität vermieden werden.

Durch die in diesem Dokument beschriebenen Maßnahmen kann in effizienter und zuverlässiger Weise der Einsatz von nicht-ausgelösten und ggf. gestohlenen pyrotechnischen Komponenten 110 vermieden werden.

Darüber hinaus kann es vorkommen, dass eine gefälschte pyrotechnische Komponente 110 in einem Fahrzeug 100 verbaut wird. Eine gefälschte pyrotechnische Komponente 110 kann dabei ggf. ausgebildet sein, um die ein oder mehreren technischen Bedingungen, insbesondere in Bezug auf den elektrischen Widerstand, zu erfüllen, die dafür erforderlich sind, den Auslöse-Status 103 von dem ausgelösten Zustand in den nichtausgelösten Zustand zurückzusetzen. Andererseits kann es jedoch vorkommen, dass die gefälschte pyrotechnische Komponente 110 nicht funktionsfähig ist (z.B., weil die pyrotechnische Komponente 110 keine Treibladung aufweist). Durch die in diesem Dokument beschriebenen Maßnahmen kann der Verbau einer gefälschten pyrotechnischen Komponente 110 zuverlässig erkannt und ggf. vermieden werden.

Ferner werden z.B. im Internet häufig pyrotechnische Komponenten 110 aus Unfallfahrzeugen oder aus Fahrzeugen mit einem Wasserschaden angeboten. Die genaue Herkunft und/oder der Funktionszustand dieser pyrotechnischen Komponenten 110 sind meist nicht bekannt. Insbesondere kann typischerweise nicht sichergestellt werden, dass eine pyrotechnische Komponente 110 aus einem Fahrzeug mit Wasserschaden (z.B. infolge einer Überschwemmung) nach Trocknung noch funktionsfähig ist. Durch die in diesem Dokument beschriebenen Maßnahmen kann der Verbau einer gebrauchten pyrotechnischen Komponente 110 zuverlässig erkannt und ggf. vermieden werden.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Steuergerät (101) zur Auslösung einer pyrotechnischen Komponente (110) eines Fahrzeugs (100); wobei das Steuergerät (101) eingerichtet ist,
- einen Auslöse-Status (103) der pyrotechnischen Komponente (110) zu ermitteln und zu speichern; wobei der Auslöse-Status (103) anzeigt, ob die pyrotechnische Komponente (110) bereits ausgelöst wurde oder nicht; wobei der Auslöse-Status (103) einen ausgelösten Zustand oder einen nichtausgelösten Zustand aufweist;
- wenn der Auslöse-Status (103) den nichtausgelösten Zustand aufweist, einen Betrieb des Steuergeräts (101) mit einer in dem Fahrzeug (100) verbauten pyrotechnischen Komponente (110) ohne Freigabe der pyrotechnischen Komponente (110) durch eine überwachende Entität zu ermöglichen; und
- wenn der Auslöse-Status (103) den ausgelösten Zustand aufweist, den Auslöse-Status (103) von dem ausgelösten Zustand in den nichtausgelösten Zustand zurückzusetzen, wenn eine Freigabe der pyrotechnischen Komponente (110) durch die überwachende Entität vorliegt; und
- ein Anzeigeelement (102) zur Anzeige einer ausgelösten pyrotechnischen Komponente (110) nur dann zurückzusetzen, wenn der Auslöse-Status (103) von dem ausgelösten Zustand in den nichtausgelösten Zustand zurückgesetzt wurde; und/oder
- die in dem Fahrzeug (100) verbaute pyrotechnische Komponente (110) nur dann bei Bedarf auszulösen, wenn der Auslöse-Status (103) von dem ausgelösten Zustand in den nichtausgelösten Zustand zurückgesetzt wurde.

2. Steuergerät (101) gemäß Anspruch 1, wobei das Steuergerät (101) eingerichtet ist,
- den Auslöse-Status (103) nur dann von dem ausgelösten Zustand in den nichtausgelösten Zustand zurückzusetzen, wenn eine Freigabe der pyrotechnischen Komponente (110) vorliegt; und/oder
- den Auslöse-Status (103) in dem ausgelösten Zustand zu belassen, wenn keine Freigabe der in das Fahrzeug (100) verbauten pyrotechnischen Komponente (110) vorliegt.

3. Steuergerät (101) gemäß einem der vorhergehenden Ansprüche, wobei
- die pyrotechnische Komponente (110) ein Identifikationsmittel (111) umfasst, das ausgebildet ist, die pyrotechnische Komponente (110) eindeutig aus einer Mehrzahl von unterschiedlichen pyrotechnischen Komponenten (110) zu identifizieren; und
- die Freigabe der in das Fahrzeug (100) verbauten pyrotechnischen Komponente (110) auf Basis des Identifikationsmittels (111) der pyrotechnischen Komponente (110) erfolgt; und
- das Steuergerät (101) insbesondere eingerichtet ist, die in das Fahrzeug (100) verbaute pyrotechnische Komponente (110) auf Basis des Identifikationsmittels (111) der pyrotechnischen Komponente (110) freizugeben oder nicht freizugeben.

4. Steuergerät (101) gemäß Anspruch 3, wobei das Identifikationsmittel (111) umfasst,
- einen maschinen-lesbaren Code, insbesondere einen Barcode oder einen QR-Code, mit einer Seriennummer der pyrotechnischen Komponenten (110); und/oder
- eine für einen Menschen lesbare Seriennummer der pyrotechnischen Komponenten (110).

5. Steuergerät (101) gemäß einem der vorhergehenden Ansprüche, wobei das Steuergerät (101) eingerichtet ist, wenn der Auslöse-Status (103) den ausgelösten Zustand aufweist,
- zu detektieren, dass eine neue pyrotechnische Komponente (110) in das Fahrzeug (100) verbaut wurde;
- zu erkennen, dass die neue pyrotechnische Komponente (110) ein oder mehrere technische Bedingungen, insbesondere in Bezug auf einen elektrischen Widerstand, erfüllt, durch die es ermöglicht wird, den Auslöse-Status (103) von dem ausgelösten Zustand in den nichtausgelösten Zustand zurückzusetzen;
- zu überprüfen, ob eine Freigabe der neuen pyrotechnischen Komponente (110) vorliegt; und
- den Auslöse-Status (103), insbesondere nur dann, von dem ausgelösten Zustand in den nichtausgelösten Zustand zurückzusetzen, wenn eine Freigabe der neuen pyrotechnischen Komponente (110) vorliegt.

6. Steuergerät (101) gemäß einem der vorhergehenden Ansprüche, wobei das Steuergerät (101) eingerichtet ist,
- zu überprüfen, ob ein gültiger Freigabecode für die Freigabe der pyrotechnischen Komponente (110) über eine Benutzerschnittstelle und/oder über eine Wartungs-Schnittstelle des Fahrzeugs (100) eingegeben wurde; und
- den Auslöse-Status (103), insbesondere nur dann, von dem ausgelösten Zustand in den nichtausgelösten Zustand zurückzusetzen, wenn ein gültiger Freigabecode eingegeben wurde.

7. Steuergerät (101) gemäß einem der vorhergehenden Ansprüche, wobei das Steuergerät (101) eingerichtet ist, eine Mehrzahl von unterschiedlichen Auslöse-Status (103) für eine Mehrzahl von unterschiedlichen pyrotechnischen Komponenten (110) des Fahrzeugs (100) zu ermitteln, zu speichern und bei Vorliegen einer Freigabe für eine jeweils neu verbaute pyrotechnische Komponente (110) zurückzusetzen.

8. Steuergerät (101) gemäß einem der vorhergehenden Ansprüche, wobei sich der Auslöse-Status (103) standardmäßig bei Herstellung des Fahrzeugs (100) in dem nichtausgelösten Zustand befindet, so dass bei der Herstellung des Fahrzeugs (100) eine pyrotechnische Komponente (110) ohne Freigabe der pyrotechnischen Komponente (110) in das Fahrzeug (100) eingebaut und anschließend bei Bedarf von dem Steuergerät (101) ausgelöst werden kann.

9. Verfahren (200) zum Schutz vor unautorisiertem Verbau einer pyrotechnischen Komponente (110) in einem Fahrzeug (100); wobei das Verfahren (200) umfasst,
- Ermitteln und Speichern (201) eines Auslöse-Status (103) der pyrotechnischen Komponente (110); wobei der Auslöse-Status (103) anzeigt, ob die pyrotechnische Komponente (110) bereits ausgelöst wurde oder nicht; wobei der Auslöse-Status (103) einen ausgelösten Zustand oder einen nichtausgelösten Zustand aufweist;
- wenn der Auslöse-Status (103) den nichtausgelösten Zustand aufweist, Ermöglichen (202) eines Betriebs des Steuergeräts (101) mit einer pyrotechnischen Komponente (110) in dem Fahrzeug (100) ohne Freigabe der pyrotechnischen Komponente (110); und
- wenn der Auslöse-Status (103) den ausgelösten Zustand aufweist, Zurücksetzen (203) des Auslöse-Status (103) von dem ausgelösten Zustand in den nichtausgelösten Zustand, wenn eine Freigabe der pyrotechnischen Komponente (110) vorliegt;
wobei das Verfahren (200) zur Freigabe einer in das Fahrzeug (100) neu verbauten pyrotechnischen Komponente (110) umfasst,
- Überprüfen eines Identifikationsmittels (111), insbesondere auf einem Backend-Server eines Herstellers des Fahrzeugs (100), der neu verbauten pyrotechnischen Komponente (110) daraufhin, ob die neu verbaute pyrotechnische Komponente (110) als Ersatzteil freigegeben ist; und
- Rückmelden einer Freigabe oder einer Nicht-Freigabe an ein Steuergerät (101) des Fahrzeugs (100) zur Auslösung der neu verbauten pyrotechnischen Komponente (110).

10. Verfahren (200) gemäß Anspruch 9, wobei eine Generierung und eine Überprüfung des Identifikationsmittels (111) in einer Block-Chain durchgeführt wird.

## Claims

1. Control unit (101) for triggering a pyrotechnic component (110) of a vehicle (100); wherein the control unit (101) is configured to
- determine and store a triggering status (103) of the pyrotechnic component (110); wherein the triggering status (103) indicates whether the pyrotechnic component (110) has already been triggered or not; wherein the triggering status (103) has a triggered state or a non-triggered state;
- when the triggering status (103) has the non-triggered state, enable operation of the control unit (101) with a pyrotechnic component (110) installed in the vehicle (100) without release of the pyrotechnic component (110) by a monitoring entity; and
- when the triggering status (103) has the triggered state, reset the triggering status (103) from the triggered state to the non-triggered state when a release of the pyrotechnic component (110) by the monitoring entity is present; and
- reset an indicator element (102) for indicating a triggered pyrotechnic component (110) only when the triggering status (103) has been reset from the triggered state to the non-triggered state; and/or
- trigger the pyrotechnic component (110) installed in the vehicle (100) when needed only when the triggering status (103) has been reset from the triggered state to the non-triggered state.

2. Control unit (101) according to claim 1, wherein the control unit (101) is configured to
- reset the triggering status (103) from the triggered state to the non-triggered state only when a release of the pyrotechnic component (110) is present; and/or
- maintain the triggering status (103) in the triggered state when no release of the pyrotechnic component (110) installed in the vehicle (100) is present.

3. Control unit (101) according to any one of the preceding claims, wherein
- the pyrotechnic component (110) comprises an identification means (111) configured to uniquely identify the pyrotechnic component (110) from a plurality of different pyrotechnic components (110); and
- the release of the pyrotechnic component (110) installed in the vehicle (100) is based on the identification means (111) of the pyrotechnic component (110); and
- the control unit (101) is particularly configured to release or not release the pyrotechnic component (110) installed in the vehicle (100) based on the identification means (111) of the pyrotechnic component (110).

4. Control unit (101) according to claim 3, wherein the identification means (111) comprises
- a machine-readable code, particularly a barcode or a QR code, with a serial number of the pyrotechnic components (110); and/or
- a human-readable serial number of the pyrotechnic components (110).

5. Control unit (101) according to any one of the preceding claims, wherein the control unit (101) is configured, when the triggering status (103) has the triggered state, to
- detect that a new pyrotechnic component (110) has been installed in the vehicle (100);
- recognize that the new pyrotechnic component (110) fulfills one or more technical conditions, particularly with respect to an electrical resistance, which enable resetting the triggering status (103) from the triggered state to the non-triggered state;
- verify whether a release of the new pyrotechnic component (110) is present; and
- reset the triggering status (103), particularly only when a release of the new pyrotechnic component (110) is present, from the triggered state to the non-triggered state.

6. Control unit (101) according to any one of the preceding claims, wherein the control unit (101) is configured to
- verify whether a valid release code for the release of the pyrotechnic component (110) has been entered via a user interface and/or via a maintenance interface of the vehicle (100); and
- reset the triggering status (103), particularly only when a valid release code has been entered, from the triggered state to the non-triggered state.

7. Control unit (101) according to any one of the preceding claims, wherein the control unit (101) is configured to determine, store, and reset a plurality of different triggering statuses (103) for a plurality of different pyrotechnic components (110) of the vehicle (100) when a release for a respective newly installed pyrotechnic component (110) is present.

8. Control unit (101) according to any one of the preceding claims, wherein the triggering status (103) is by default in the non-triggered state during manufacture of the vehicle (100), so that during the manufacture of the vehicle (100), a pyrotechnic component (110) can be installed in the vehicle (100) without release of the pyrotechnic component (110) and subsequently triggered by the control unit (101) when needed.

9. Method (200) for protection against unauthorized installation of a pyrotechnic component (110) in a vehicle (100); wherein the method (200) comprises
- determining and storing (201) a triggering status (103) of the pyrotechnic component (110); wherein the triggering status (103) indicates whether the pyrotechnic component (110) has already been triggered or not; wherein the triggering status (103) has a triggered state or a non-triggered state;
- when the triggering status (103) has the non-triggered state, enabling (202) operation of the control unit (101) with a pyrotechnic component (110) in the vehicle (100) without release of the pyrotechnic component (110); and
- when the triggering status (103) has the triggered state, resetting (203) the triggering status (103) from the triggered state to the non-triggered state when a release of the pyrotechnic component (110) is present;
wherein the method (200) for releasing a newly installed pyrotechnic component (110) in the vehicle (100) comprises
- verifying an identification means (111), particularly on a backend server of a manufacturer of the vehicle (100), of the newly installed pyrotechnic component (110) as to whether the newly installed pyrotechnic component (110) is released as a spare part; and
- reporting back a release or a non-release to a control unit (101) of the vehicle (100) for triggering the newly installed pyrotechnic component (110).

10. Method (200) according to claim 9, wherein generation and verification of the identification means (111) is carried out in a blockchain.

## Revendications

1. Unité de commande (101) pour le déclenchement d'un composant pyrotechnique (110) d'un véhicule (100) ; l'unité de commande (101) étant configurée pour
- déterminer et stocker un état de déclenchement (103) du composant pyrotechnique (110) ; l'état de déclenchement (103) indiquant si le composant pyrotechnique (110) a déjà été déclenché ou non ; l'état de déclenchement (103) présentant un état déclenché ou un état non déclenché ;
- lorsque l'état de déclenchement (103) présente l'état non déclenché, permettre le fonctionnement de l'unité de commande (101) avec un composant pyrotechnique (110) installé dans le véhicule (100) sans autorisation du composant pyrotechnique (110) par une entité de surveillance ; et
- lorsque l'état de déclenchement (103) présente l'état déclenché, réinitialiser l'état de déclenchement (103) de l'état déclenché à l'état non déclenché lorsqu'une autorisation du composant pyrotechnique (110) par l'entité de surveillance est présente ; et
- réinitialiser un élément indicateur (102) pour indiquer un composant pyrotechnique (110) déclenché uniquement lorsque l'état de déclenchement (103) a été réinitialisé de l'état déclenché à l'état non déclenché ; et/ou
- déclencher le composant pyrotechnique (110) installé dans le véhicule (100) en cas de besoin uniquement lorsque l'état de déclenchement (103) a été réinitialisé de l'état déclenché à l'état non déclenché.

2. Unité de commande (101) selon la revendication 1, l'unité de commande (101) étant configurée pour
- réinitialiser l'état de déclenchement (103) de l'état déclenché à l'état non déclenché uniquement lorsqu'une autorisation du composant pyrotechnique (110) est présente ; et/ou
- maintenir l'état de déclenchement (103) dans l'état déclenché lorsqu'aucune autorisation du composant pyrotechnique (110) installé dans le véhicule (100) n'est présente.

3. Unité de commande (101) selon l'une quelconque des revendications précédentes, dans laquelle
- le composant pyrotechnique (110) comprend un moyen d'identification (111) configuré pour identifier de manière unique le composant pyrotechnique (110) parmi une pluralité de composants pyrotechniques (110) différents ; et
- l'autorisation du composant pyrotechnique (110) installé dans le véhicule (100) est basée sur le moyen d'identification (111) du composant pyrotechnique (110) ; et
- l'unité de commande (101) est particulièrement configurée pour autoriser ou ne pas autoriser le composant pyrotechnique (110) installé dans le véhicule (100) sur la base du moyen d'identification (111) du composant pyrotechnique (110).

4. Unité de commande (101) selon la revendication 3, dans laquelle le moyen d'identification (111) comprend
- un code lisible par machine, en particulier un code-barres ou un code QR, avec un numéro de série des composants pyrotechniques (110) ; et/ou
- un numéro de série lisible par l'homme des composants pyrotechniques (110).

5. Unité de commande (101) selon l'une quelconque des revendications précédentes, l'unité de commande (101) étant configurée, lorsque l'état de déclenchement (103) présente l'état déclenché, pour
- détecter qu'un nouveau composant pyrotechnique (110) a été installé dans le véhicule (100) ;
- reconnaître que le nouveau composant pyrotechnique (110) remplit une ou plusieurs conditions techniques, en particulier en ce qui concerne une résistance électrique, qui permettent de réinitialiser l'état de déclenchement (103) de l'état déclenché à l'état non déclenché ;
- vérifier si une autorisation du nouveau composant pyrotechnique (110) est présente ; et
- réinitialiser l'état de déclenchement (103), en particulier uniquement lorsqu'une autorisation du nouveau composant pyrotechnique (110) est présente, de l'état déclenché à l'état non déclenché.

6. Unité de commande (101) selon l'une quelconque des revendications précédentes, l'unité de commande (101) étant configurée pour
- vérifier si un code d'autorisation valide pour l'autorisation du composant pyrotechnique (110) a été saisi via une interface utilisateur et/ou via une interface de maintenance du véhicule (100) ; et
- réinitialiser l'état de déclenchement (103), en particulier uniquement lorsqu'un code d'autorisation valide a été saisi, de l'état déclenché à l'état non déclenché.

7. Unité de commande (101) selon l'une quelconque des revendications précédentes, l'unité de commande (101) étant configurée pour déterminer, stocker et réinitialiser une pluralité d'états de déclenchement (103) différents pour une pluralité de composants pyrotechniques (110) différents du véhicule (100) lorsqu'une autorisation pour un composant pyrotechnique (110) nouvellement installé respectif est présente.

8. Unité de commande (101) selon l'une quelconque des revendications précédentes, dans laquelle l'état de déclenchement (103) est par défaut dans l'état non déclenché lors de la fabrication du véhicule (100), de sorte que lors de la fabrication du véhicule (100), un composant pyrotechnique (110) peut être installé dans le véhicule (100) sans autorisation du composant pyrotechnique (110) et ultérieurement déclenché par l'unité de commande (101) en cas de besoin.

9. Procédé (200) de protection contre l'installation non autorisée d'un composant pyrotechnique (110) dans un véhicule (100) ; le procédé (200) comprenant
- la détermination et le stockage (201) d'un état de déclenchement (103) du composant pyrotechnique (110) ; l'état de déclenchement (103) indiquant si le composant pyrotechnique (110) a déjà été déclenché ou non ; l'état de déclenchement (103) présentant un état déclenché ou un état non déclenché ;
- lorsque l'état de déclenchement (103) présente l'état non déclenché, permettre le fonctionnement (202) de l'unité de commande (101) avec un composant pyrotechnique (110) dans le véhicule (100) sans autorisation du composant pyrotechnique (110) ; et
- lorsque l'état de déclenchement (103) présente l'état déclenché, la réinitialisation (203) de l'état de déclenchement (103) de l'état déclenché à l'état non déclenché lorsqu'une autorisation du composant pyrotechnique (110) est présente ;
le procédé (200) pour autoriser un composant pyrotechnique (110) nouvellement installé dans le véhicule (100) comprenant
- la vérification d'un moyen d'identification (111), en particulier sur un serveur backend d'un fabricant du véhicule (100), du composant pyrotechnique (110) nouvellement installé pour déterminer si le composant pyrotechnique (110) nouvellement installé est autorisé comme pièce de rechange ; et
- le signalement d'une autorisation ou d'une non-autorisation à une unité de commande (101) du véhicule (100) pour le déclenchement du composant pyrotechnique (110) nouvellement installé.

10. Procédé (200) selon la revendication 9, dans lequel la génération et la vérification du moyen d'identification (111) sont effectuées dans une blockchain.
